# EUROPEAN PATENT SPECIFICATION

(11) **EP 2 777 037 B1**
(45) Date of publication and mention of the grant of the patent: **28.12.2016**
(21) Application number: 12846847.7
(22) Date of filing: 07.11.2012
(51) Int. Cl.: G06F 1/32, G09G 3/20, G09G 3/36, G09G 3/34

(54) **SYSTEMS AND METHOD FOR DISPLAY SYSTEMS HAVING IMPROVED POWER PROFILES**
SYSTEME UND VERFAHREN FÜR ANZEIGESYSTEME MIT VERBESSERTEN LEISTUNGSPROFILEN
SYSTÈMES ET PROCÉDÉ POUR SYSTÈMES D'AFFICHAGE À PROFILS DE PUISSANCE AMÉLIORÉS

(30) Priority: 11.11.2011 US 201161558654 P
(43) Date of publication of application: 17.09.2014
(73) Proprietor: Dolby Laboratories Licensing Corporation, San Francisco, CA 94103 (US)
(72) Inventor: NINAN, Ajit, San Francisco, California 94103-4813 (US); HUANG, Qifan, Foster City, California 94404 (US); MATURI, Greg, San Francisco, California 94103-4813 (US); MAMMEN, Neil, San Francisco, California 94103-4813 (US); KRONROD, James, San Francisco, California 94103-4813 (US)
(74) Representative: Dolby International AB Patent Group Europe
(86) International application number: PCT/US2012/063955
(87) International publication number: WO 2013/070774

(56) References cited:
- WO-A1-2010/045039
- WO-A1-2011/011548
- WO-A2-2011/008724
- JP-A- H07 181 916
- JP-A- 2008 304 907
- JP-A- 2010 066 743
- US-A1- 2002 005 861
- US-A1- 2009 189 842
- US-A1- 2011 025 728
- US-A1- 2011 074 799

## Description

### CROSS-REFERENCE TO RELATED APPLICATIONS

This application claims priority to United States Provisional Application No. 61/558,654 filed 11 November 2011.

### TECHNICAL FIELD

The present invention relates generally to display systems and, in particular, display systems having improved power profiles.

### BACKGROUND

High Dynamic Range (HDR) display systems have extended the performance of image rendering to accommodate the human eye's dynamic range - resulting in a demonstrably better visual experience for the viewer. However, in some embodiments of such HDR display systems, this is brought about by the effective local modulation of arrays of individual light emitters, such as LEDs. Power usage of these displays (e.g. monitors, laptop displays, mobile displays, television, etc.) has become a concern.

As a result, reducing the overall - as well as instantaneous - power demands of such displays may be desired.

WO 2011/011548 A1 discloses a backlight for a display comprising one or more backlight controllers configured to independently control brightness levels of segments of light emitters with pulse width modulation driving signals.

US 2002/005861 A1 discloses a method for driving an LED backlight device using pulse width modulation. By reducing the update rate of the backlight, additional resolution for driving the LEDs is gained.

WO 2011/008724 A2 discloses systems and methods for controlling drive signals in spatial light modulator displays. A ramping pattern is used to slow the modification of the light source intensity from an old value to a new value. The light sources may be blanked if a blanking condition related to image properties is satisfied.

WO 2010/045039 A1 discloses a backlight simulation at reduced resolutions to determine spatial modulation of light for high dynamic range images. Pixel data is adjusted instead of adapting the backlight.

US 2011/025728 A1 discloses an image display apparatus comprising a liquid crystal panel that is illuminated by a backlight. The emission period of the backlight is set to the second half of one frame period.

### SUMMARY

The invention is defined by the independent claims, taking due account of any element which is equivalent to an element specified in the claims. The dependent claims concern optional features of some embodiments of the invention. In several embodiments of the present invention, techniques are provided to provide various pulse width modulation (PWM) schemes to embodiments of dual modulator display systems. Dual modulator display systems comprise a backlight of individually addressable and controllable light emitters. The backlight provides illumination to a light modulator, e.g. an LCD, for further conditioning of the light to be presented to a viewer. In one embodiment, the backlight is striped and each stripe is assigned a PWM scheme that effectively increases the bit depth of the controller for each stripe. In another embodiment, the display system may allow a better matching of PWM periods to LCD frame rates to reduce visual artifacts. In another embodiment, the display system may detect a small bright feature to be rendered in the image data and, with a pre-assignment of light emitters to different partitions, the backlight controller may drive a subset of the light emitters according to the partitions - as opposed to driving the subset according to the PWM scheme.

### BRIEF DESCRIPTION OF DRAWINGS

The present invention is illustrated by way of example, and not by way of limitation, in the figures of the accompanying drawings and in which like reference numerals refer to similar elements and in which:
FIG. 1A shows a high level architecture of a display system that affects a high dynamic range performance.
FIG. 1B shows an example of a high dynamic range display system comprising a segmentation of backlighting and light modulators.
FIG. 2 shows an example of a conventional PWM scheme involving four groups of light emitters.
FIGS. 3 and 4 depict two examples of conventional PWM offset schemes that may lower instantaneous power demand on the display system.
FIGS. 5A and 5B depict two examples of a conventional backlight architecture that affect a tiling and/or segmentation of light emitters and driven by a controller or multiple controller scheme.
FIG. 6 depicts one example of a conventional PWM driving scheme in which four duty cycles may be permitted and the light emitters may be turned on at different times within a cycle.
FIG. 7 depicts one embodiment of a PWM scheme according to the present invention in which the light emitters of the backlight may be striped and a PWM waveform applied to each stripe, staggered in time as desired.
FIG. 8 depicts one embodiment of a PWM scheme according to the present invention that affects an effective greater bit depth control by the PWM controller.
FIG. 9 depicts one embodiment of a PWM scheme according to the present invention that shows that the higher bit depth processing for a staggered stripe may be wrapped around to produce a desired result.
FIGS. 10 and 11 depict embodiments of a display system according to the present invention with a PWM scheme that may handle occasional small, bright features within an image.

### DESCRIPTION OF EXAMPLE POSSIBLE EMBODIMENTS

Example possible embodiments, which relate to image processing techniques, are described herein. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily occluding, obscuring, or obfuscating the present invention.

In some such displays, the backlight includes multiple light emitting devices, such as LEDs, for illuminating regions of the spatial light modulator. Such light emitting devices or groups of such light emitting devices may be separately controllable so that the intensity of light emitted by the backlight can be made to vary in a desired way over the spatial light modulator. Such displays are referred to herein as dual-modulation displays. Some examples of dual modulation displays are described in co-owned patents and patent applications: (1) United States Patent No. 6891672 ("the '672 patent") and entitled "HIGH DYNAMIC RANGE DISPLAY DEVICES", (2) United States Patent No. 7403332 ("the '332 patent") and entitled "HIGH DYNAMIC RANGE DISPLAY DEVICES", and (3) United States Patent Application Publication No. 2008/0180466 ("the '466 application") and entitled "RAPID IMAGE RENDERING ON DUAL-MODULATOR DISPLAYS".

In addition, in co-owned patent applications: (1) WO/2011/011548 ("the '548 application") entitled "REDUCED POWER DISPLAYS" and (2) WO/2011/011446 ("the '446 application") entitled "CONTROL OF ARRAY OF TWO-DIMENSIONAL IMAGING ELEMENTS IN LIGHT MODULATING DISPLAYS", there are described display systems comprising an array of independently controllable backlights (e.g., LEDs, OLEDs, electroluminescent panels (ELPs), CCFLs, incandescent lamps, quantum dots and/or other controllable emitters or the like) and a light modulator (e.g. LCD or the like). These display systems have demonstrably better dynamic range performance than other display systems commonly in use - primarily through the combined effects of separately modulating the backlight in a local manner (typically dependent upon image data meant to be rendered in substantially real time) and convolving with the light modulator.

As some embodiments of these display systems may employ a reasonably large number of emitters in their backlight, overall power consumption of these systems is a concern. In particular, the '446 application describes a number of techniques, systems and methods meant to reduce the total power consumption of such unique display configurations. By application of various Pulse Width Modulation (PWM) schemes, the techniques of the '446 application help to reduce the overall power consumption. PWM typically involves controlling the brightness of light emitters on a backlight. A light emitting device such as an LED may be switched between an ON state at 100% brightness and an OFF state at 0% brightness by switching on and off a suitable fixed electrical current through the device. PWM operates by pulsing each light emitter to its ON state for some percentage of a repeating time period. If the time period is sufficiently short (e.g. 1 millisecond) the human visual system does not detect the light emitter cycling between ON and OFF states. An observer merely perceives the average emitted light intensity, which is proportional to the percentage of the PWM period that the device is in the ON state. This percentage is referred to as the duty cycle of the PWM signal. For example, a light emitter driven by a PWM signal with a duty cycle of 75% is switched on for 75% of each PWM period and appears to an observer as if it were steadily emitting light having a brightness of 75% of its maximum brightness. Further improvements (as described herein) to these PWM schemes may allow for even greater improvements of the overall power consumption.

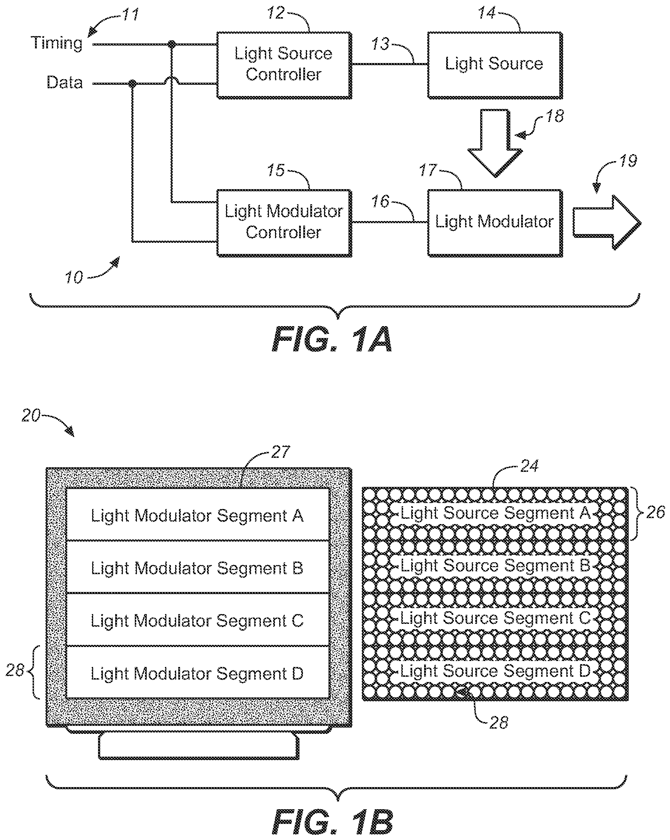

FIG. 1A shows a typical display system 10 used in the present application. System 10 comprises light source controller 12 and light modulator controller 15 that - in one embodiment - may input timing and image data signals 11. Controllers 12 and 15 are control light source 14 and light modulator 17 via communications pathways 13 and 16 respectively. Light 18 emitted by source 14 illuminates modulator 17 and transmits to a viewer along a pathway 19.

FIG. 1B shows one example of a display system 20 (in a somewhat exploded view) which is useful for understanding the present invention and in which the basic architecture of Figure 1 may be partitioned, segmented or otherwise striped. Display system 20 may have its light modulator 27 segmented (e.g., in segments 28 -- A, B, C, D, as shown - or in any other fashion). In addition, the light source 24 may likewise be segmented or striped (e.g., segments 26 A, B, C D, as shown - or in any other fashion). Each light source stripe may comprise an array of emitters 28 (e.g. 20 x 4 or any other striping, such as 16 LEDs by 3 rows).

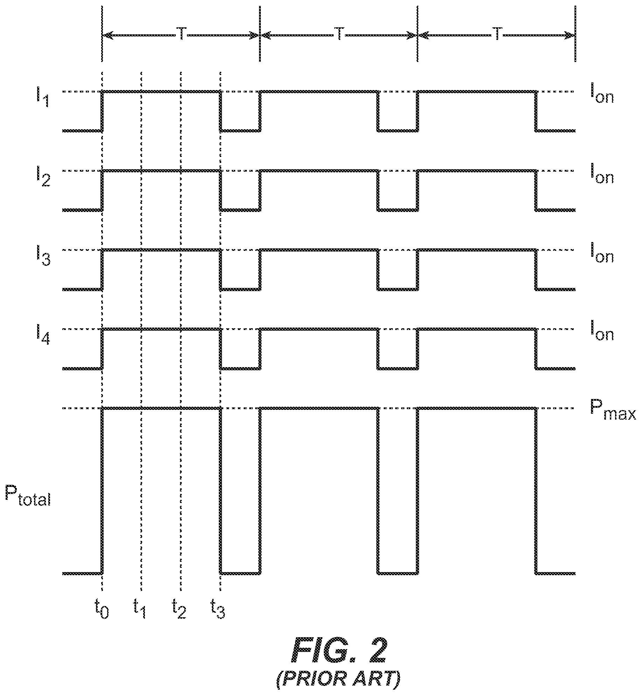

For one conventional example of PWM which is useful for understanding the present invention, FIG. 2 illustrates four PWM driving signals I1-I4 for driving four light emitters or groups of light emitters on a backlight. The PWM signals I1-I4 each have a period T and an on-time or duty cycle of 75% of T. All of the signals are in phase with each other. They each rise together by a current Iₒₙ at time t0 and fall together at time t3. Current Iₒₙ corresponds to the current required to drive the light emitters in their ON state. PWM driving signals I1-I4 are depicted as identical in FIG. 2 for ease of illustration; however, in a dual modulation display each signal may be individually-controllable to have a specific duty cycles. Thus different light emitters may operate at different brightness levels. In typical PWM as illustrated in Fig. 2, brightness levels are controlled by varying the time at which each light emitter is switched off within a PWM cycle; that is, the duty cycle is timed from the start of each PWM cycle.

The waveform Pₜₒₜₐₗ in FIG. 2 represents total electrical power required to drive the light emitters controlled by the four PWM driving signals I1-I4. Total power, Pₜₒₜₐₗ, is the sum of the power consumed by each such light emitter at a given time, as given by P=I V where I is the driving current through the light emitter and V is the corresponding voltage drop across the light emitter at that time. As seen in FIG. 2, Pₜₒₜₐₗ jumps immediately to a maximum value, Pₘₐₓ, at time t0. For example, if each PWM signal 11-14 drove a light emitter consuming power of (Iₒₙ) (_{Von}) when in an ON state, Pₘₐₓ would equal 4 (Iₒₙ)(Vₒₙ), Pₜₒₜₐₗ remains at Pₘₐₓ from times t0 to t3 and then drop to zero for the final quarter of each PWM cycle as every light emitter switches to the OFF state. Similarly, the four LEDs would draw a total current of 4 (Iₒₙ) from times t0 to t3 and then draw zero total current for the final quarter of each cycle.

A drawback to PWM when used with multiple light emitters is that the light emitters are all turned on simultaneously for some duration during the beginning of each PWM cycle (for any non-zero brightness setting). The result is that the power supply for the display must be able to deliver enough power to fully drive all of the light emitters for at least a short time and to provide this power almost instantaneously, regardless of the display's effective brightness level. This requirement increases the cost and complexity of the display's power supply, particularly for backlights having large numbers of light emitters. Some backlights may have dozens, hundreds or thousands of individual light emitters. This problem is particularly acute in the case that the display has the capability of displaying very bright images as is the case, for example, in some high dynamic range (HDR) displays. Such displays may be capable of displaying images having local light intensities of 2000 cd/m² or more. In such displays, light emitting elements may be of types that consume significant electrical power in their ON states.

In some embodiments, such transient power requirements are reduced by dividing the light emitters of a backlight into several groups and staggering the start times of PWM cycles for different ones of the groups over time. The light emitters can be divided into groups in any convenient manner.

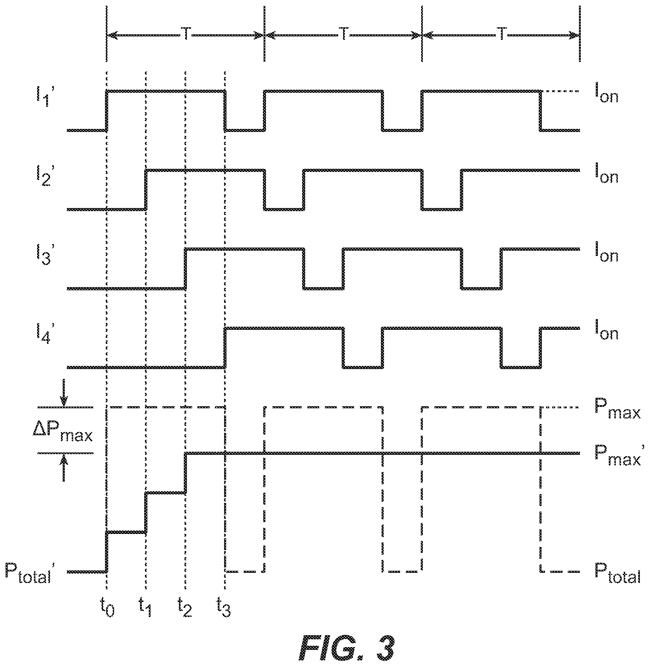

FIG. 3 illustrates PWM driving signals I1'-I4' according to an example which is useful for understanding the present invention and in which the light emitters of a backlight have been divided into four groups. Each group of light emitters is controlled by one of PWM signals I1'-I4'. As in FIG. 2, each PWM signal has a duty cycle of 75% so that the light emitters operate at an effective brightness of 75%. However, in contrast to FIG. 2, PWM signals I1'-I4' in FIG. 3 are 90 degrees out of phase with one another. As can be seen, by staggering the starting point of each group's PWM cycle the total power P_{total'} required by the four groups of light emitters ramps up in steps at times t0, t1 and t2 during the first PWM cycle to a maximum value P_{max'}. Total power P_{total'} then remains constant at maximum value P_{max'} during subsequent PWM cycles as shown.

The waveform Pₜₒₜₐₗ of FIG. 2 is shown in a dotted line overlaying P_{total'} in FIG. 3 to more easily see the differences in power requirements. As may be seen, the repeated power surges of Pₜₒₜₐₗ associated with all light emitters switching on simultaneously at the start of each PWM cycle are avoided in P_{total'}. Rather, P_{total'} ramps up in steps over the first PWM cycle to a level P_{max'} at which it remains until the PWM signals are changed to display a subsequent image. As well as avoiding or reducing power surges, staggering start times of light emitters may result in a lower maximum power requirement for a given set of driving signals. In the illustrated embodiment P_{max'} is less than Pₘₐₓ by an amount ΔPₘₐₓ.

For example, assuming for the sake of simplicity that each PWM signal I1'-I4' drives a light emitter consuming power of (Iₒₙ) (Vₒₙ) when in an ON state, P_{total'} steps up incrementally by (Iₒₙ) (Vₒₙ) at times t0, t1 and t2 to a maximum P_{max'} of 3 (Iₒₙ)(Vₒₙ). Thus, the maximum power P_{max'} is 75% of the equivalent maximum power Pₘₐₓ of 4(Iₒₙ)(Vₒₙ) required when the PWM signals are in phase as illustrated in FIG. 2.

This concept may be extended to provide embodiments having any number of groups of light emitters having any suitable relative phase shift between their PWM signals. For example, in some embodiments light emitters are divided into N groups wherein PWM signals of each group are phase-shifted by 360 /N relative to one another. The power requirements of a backlight will vary depending on a number of factors including the number of light emitters and the duty cycles and phase offsets of the PWM signals applied to each light emitter. The duty cycles (and hence the brightness levels) of the light emitters may be independently controllable as mentioned above. In some embodiments, advantages obtained by phase-shifting PWM signals may include the advantage that total power ramps up more gradually, is distributed more evenly and is held to a lower maximum value than if the same PWM signals were applied in phase.

PWM signals for a given image may cycle without change for as long as that image is being displayed. When a new image is displayed, the PWM driving signals may be updated to reflect image data for the new image. During the first PWM cycle of each new image, the total power may be required to ramp up from zero to a maximum value determined by the updated PWM signals. As described above, this initial ramp-up time may be extended by configuring groups of PWM signals to be out of phase with one another. During subsequent PWM cycles of the same image the total power may remain constant at this maximum value (as in the example illustrated in FIG. 3) or fluctuate to some degree relative to the initial ramp-up of the first PWM cycle.

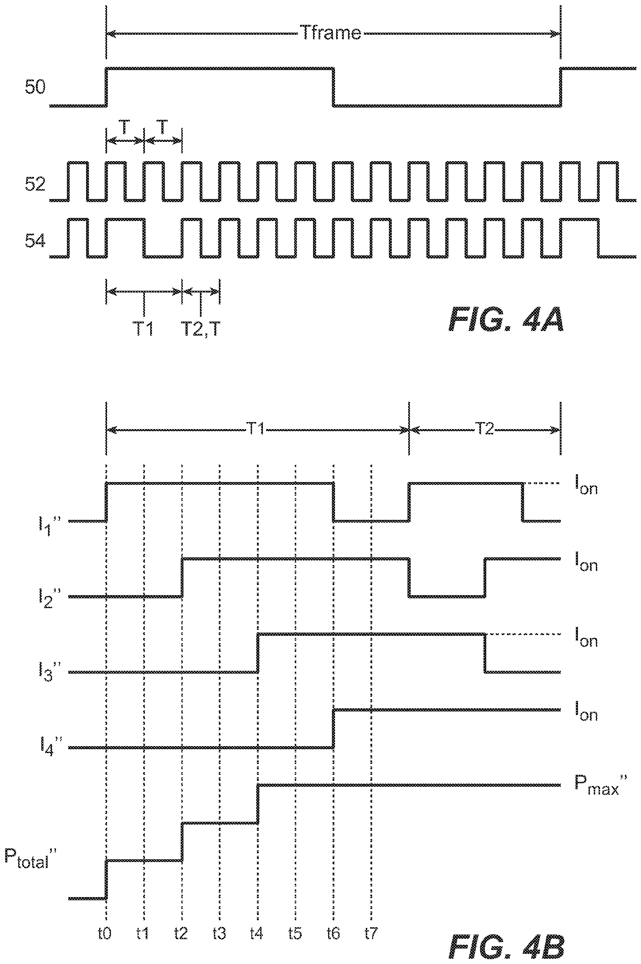

For video images, image data and corresponding PWM driving signals may be updated at the start of each video frame. The PWM period may be much shorter than the video frame period such that multiple PWM cycles occur within a single video frame. For example, in some embodiments video frame periods are in the range of 3 to 16.7 milliseconds while PWM periods are in the range of 0.1 to 2 milliseconds. Example waveforms which are useful for understanding the present invention and which are representing frame periods and PWM periods are illustrated in FIG. 4A. Waveform 50 represents example video frame cycles having a period of T_{frame}. Waveform 52 represents example PWM cycles having a period T. In this non-limiting example, each frame cycle of waveform 50 contains twelve PWM cycles of waveform 52.

According to another embodiment, the duration of the first PWM cycle after an image update is extended in time relative to subsequent PWM cycle periods of the same image. The image may be a video frame or a still image. Since power fluctuation or surges tend to be greatest during the first PWM cycle (as power ramps up from zero to a maximum value as illustrated in FIG. 3), lengthening the first PWM cycle allows more time for this initial power ramp-up to occur and reduces the power surge demands on the power supply accordingly. If only the first PWM cycle after an image update is extended (but still kept short relative to a frame period), there should be no visible effect on the light emitter brightness. The first PWM cycle period after an update may be extended in time up to about 2 milliseconds for example.

Waveform 54 of FIG. 4A is similar to waveform 52 except that the first PWM cycle of each frame cycle has a duration T1 that is longer than a period T2 of the subsequent PWM cycles within the frame cycle according to an example embodiment of the invention. Period T1 may be made any suitable amount longer than period T2. In some embodiments, period T1 is an integer multiple of period T2. In some embodiments the ratio of T1/T2 is in the range of 1.5 to 10 for example. In the illustrated embodiment, by way of non-limiting example, period T1 is twice as long as period T2 (where T2 is equivalent to period T of waveform 52).

FIG. 4B illustrates an example which is useful for understanding the present invention and where the phase shifting illustrated in FIG. 3 and the lengthened PWM cycle illustrated in FIG. 4A is combined. In FIG. 4B, the duration of the first PWM cycle of signals I1"-I4" is twice as long as the subsequent PWM cycles. The PWM signals I1"-I4" in FIG. 4B are otherwise the same as I1'-I4' shown in FIG. 3. As can be seen, the total power P_{total"} steps up from zero to a maximum value P_{max"} (equal to P_{max'} in FIG. 3) at times t0, t2 and t4 of the first PWM cycle. The initial power ramp-up time is thus doubled relative to the example of FIG. 3.

Decreasing the ramp-up rate, magnitude and frequency of power variations of a backlight as described above may in turn decrease the complexity and cost of the power supply needed to power the backlight. For example, various parameters of a power supply such as surge capacity, load regulation and transient response may be eased where PWM signals are offset as illustrated in FIGS. 3 and 4. Surge capacity is a measure of the maximum current that a power supply is capable of supplying over a given period at a given duty cycle. The surge capacity of a power supply may be significantly greater than its average output power capacity. Load regulation is a measure of the ability of the power supply to maintain a constant output voltage in response to variations in the output load. Transient response is a measure of the time it takes for the output voltage to settle to a steady output voltage after an output load change. By moderating variations in output current required by the power supply, backlights according to embodiments of the present invention allow for power supplies having more moderate surge capacity, load regulation, and/or transient response. Also, reducing the surge currents delivered to the backlight may permit use of a power supply without complicated surge protection circuits.

Furthermore, the efficiency and reliability of the power supply may be increased where PWM signals are offset as illustrated in FIGS. 3 and 4. Power supplies tend to be more efficient when they are operated to supply a relatively consistent current and less efficient when bouncing between full and light loading. Similarly, electrical components of the power supply tend to be stressed less and last longer when the current drawn from the power supply is not bouncing between full and light loading.

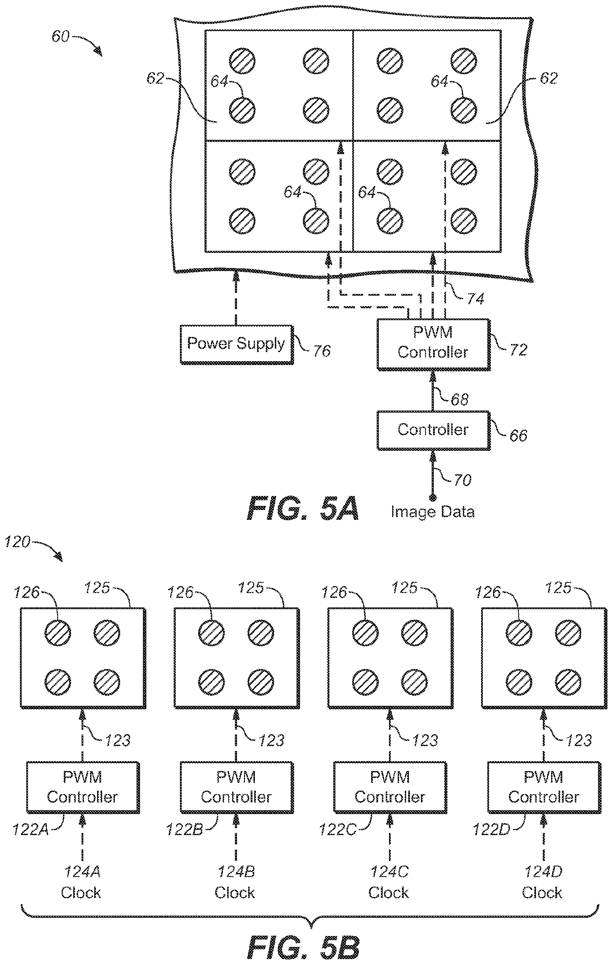

FIG. 5A illustrates a portion of a backlight 60 comprising multiple tiles 62 of light emitters 64 according to an example which is useful for understanding the present invention. Light emitters 64 may be LEDs for example. In some embodiments backlight 60 comprises a two-dimensional array of tiles 62 and each tile comprises a two-dimensional arrangement of light emitters 64. In some embodiments each tile 62 comprises a printed circuit board (PCB) comprising an array of LEDs or other light emitters.

A display incorporating backlight 60 may also comprise a controller 66 that generates brightness signals 68 according to input image data 70. Brightness signals 68 may be analog or digital signals representing the desired brightness level for one or more light emitters 64. Backlight 60 may also comprise one or more PWM controllers 72 for converting brightness signals 68 into PWM driving signals 74, which may directly control the brightness of light emitters 64. In some embodiments, backlight 60 comprises multiple PWM controllers 72, each controlling multiple light emitters 64 such as LEDs. In some embodiments, each tile 62 comprises one or more PWM controllers 72 for controlling light emitters 64 on that tile. For example, tiles 62 comprise PCBs having PWM controllers 72 integrated therein for controlling light emitters 64 on that PCB. Controller 66 and PWM controller 72 may be separate physical devices or may be combined within the same physical device.

PWM driving signals 74 may be waveforms comprising a sequence of cycles having a given duration, duty cycle and phase offset. PWM driving signals 74 may operate to switch on and off a fixed electrical current through a light emitter 64. In some embodiments, PWM driving signals 74 of one tile are phase shifted relative to PWM driving signals 74 of another tile (as illustrated for example in FIG. 3). In some embodiments, the duration of the first PWM cycle of an image displayed is longer than the duration of subsequent PWM cycles of the same image (as illustrated for example in FIG. 4B).

In the illustrated example, PWM controller 72 outputs multiple PWM driving signals 74 that each controls a separate tile 62. In some embodiments, all light emitters 64 on a tile 62 are controlled by a common PWM driving signal 74 generated for that tile. In other embodiments, duty cycles of PWM driving signals 74 for each light emitter 64 are independently controllable by one or more PWM controllers 72.

In some embodiments a controller chip or circuit individually controls multiple light emitters. In some embodiments the PWM controller chip or circuit is configured so that start times of the PWM signals generated for the light emitters are staggered relative to one another. In a backlight constructed using such PWM controller chip or circuits the times at which different groups of light emitters are turned ON are automatically staggered.

Backlight 60 also comprises a power supply 76 for providing electrical power to light emitters 64 on the backlight. Power supply 76 may be configured to satisfy particular power requirements necessary to generate the desired range of brightness of light emitters 64. Such power requirements may include load regulation, transient response and/or surge capacity for example. If the start time of groups of PWM signals are staggered as illustrated in FIGS. 3 or 4, light emitters 64 are not all switched on to 100% brightness at the same time and such power requirements may be reduced as described above. In particular, in some embodiments, power supply 76 has a surge capacity that is less than the surge capacity that would be required if all light emitters 64 were switched on at the same time. The percentage reduction in surge capacity of power supply 76 may be proportional to the percentage reduction in the number of light emitters driven by PWM signals having the same phase offset. In some embodiments, power supply 76 has a maximum surge capacity less than half the surge capacity that would be required if all light emitters 64 were switched on at the same time.

Similarly, in some embodiments power supply 76 is capable of a maximum output surge current (out-rush current) that is less than the total in-rush current that would be required by light emitters 64 if all light emitters 64 were switched on at the same time. For example, if backlight 60 comprises N light emitters and each light emitter requires an in-rush current of Iᵣᵤₛₕ when switched on, then power supply 76 may have a maximum out-rush current of less than N(Iᵣᵤₛₕ) while being capable of supplying the average current required. In some embodiments, power supply 76 has a maximum out-rush current less than 0.75(N)(Iᵣᵤₛₕ). In some embodiments, power supply 76 has a maximum out-rush current less than 0.5(N)(Iᵣᵤₛₕ).

Power supply 76 may be configured to have the capacity to supply a continuous output current sufficient to sustain a desired average brightness of backlight 60. In some embodiments, power supply 76 is capable of generating a maximum average light intensity over the entire backlight 60 that is less than localized light intensities it may generate over portions of backlight 60. For example, power supply 76 may be capable of generating localized light intensities of 2000 cd/m² or more over portions of backlight 60 while only capable of generating a maximum average light intensity of 400 cd/m² over the entire backlight 60.

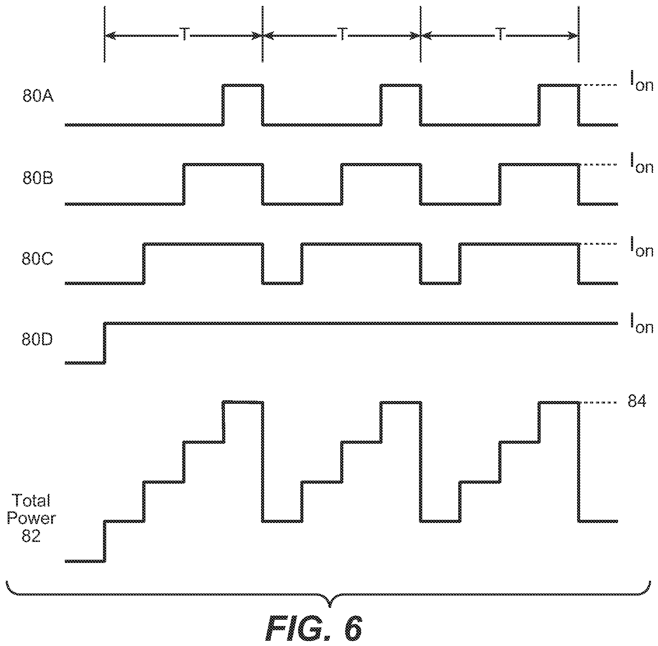

In the '548 application, there is described a method (labeled method 100 in Figure 6 of the '548 application) of generating PWM signals to drive groups of light emitters on a backlight to display an image according to an example embodiment of the present invention. That method may be implemented in one or more controllers for a backlight for example.

At block 102 of method 100 involves determining brightness values for all light emitters on a backlight of a display based on image data representing an image to be displayed. In that method, the light emitters are divided into a plurality of groups. The brightness values may be determined independently for each separate light emitter or for each separate group so that the intensity of light emitted by the backlight and incident on a spatial light modulator can be made to vary in a desired way over the spatial light modulator. The brightness values may be represented by electronic analog or digital signals, for example.

At block 104 of method 100, PWM duty cycles are determined for the light emitters of each group based on the brightness values determined at block 102. The duty cycles may be expressed for example as the percentage or ratio of each PWM period that the light emitter should be in an ON state to produce the desired brightness level.

At block 106 of method 100, PWM driving signals having the duty cycle determined at block 104 and a phase offset predetermined for each group are generated and applied to each light emitter. The phase offsets applied for each group differ from one another so as to stagger the start times of PWM cycles of different groups (as illustrated in FIG. 3). For example, phase offsets for each group may be applied in increments of 360 /N where N is the number of groups.

At block 108, the duration of each PWM cycle is set such that a first PWM cycle of the image is longer than duration of subsequent PWM cycles for the given image (as is illustrated in FIG. 4B). For example, the first PWM cycle may be made to be twice as long as subsequent PWM cycles. One benefit of extending the first cycle is to extend the ramp-up time required for the power and current drawn by the light emitters.

It is not necessary that a PWM cycle always comprise a contiguous on-time portion followed by a contiguous off-time portion. For a given duty cycle, the pattern of on-time and off-time may varied so long as the overall ratio of on-time to off-time within the cycle is maintained. For example, the order of on-time and off-time within a cycle may be reversed such that a light emitter remains off for some first portion of the cycle and then turns on for the remaining portion of the cycle. In this case, light emitters having different brightness levels may turn on at different times within the same PWM cycle (and switch off at the same time at the end of the cycle). FIG. 6 of the present application illustrates four waveforms 80A-80D representing PWM signals having duty cycles of 25%, 50%, 75% and 100% respectively and a period T, wherein the on-time of each period follows the off-time. As illustrated in FIG. 6, the resulting total power waveform 82 steps up to a maximum value 84 during each cycle rather than rising instantaneously to the maximum value at the start of each cycle.

As another example, on-time may also be centered within a PWM cycle such that different power levels rise and fall at different times. On-time and off- time may be interspersed within a PWM cycle in any other chosen manner so long as the overall proportion of on-time to off-time within the cycle remains the same. Where a discrete number of brightness levels are defined for light emitters of the display (for example 2ⁿ brightness levels where n is a number of bits defining brightness), each cycle may be divided into that number of segments (for example 2ⁿ segments) during which a light emitter may be set ON or OFF. Each brightness level may correspond to a particular pattern of ON/OFF segments within a PWM cycle. Different groups of light emitters may employ different sets of ON/OFF patterns for each brightness level such that on-times between groups are staggered even if set to the same brightness level. The total power requirements may thus be distributed more evenly across PWM cycles.

Variations in the distribution of on-time and off-time within PWM cycles may be combined with variations in phase offsets for groups of PWM signals as described above. For example, the start times of individual light emitters within a group having a common phase offset may be staggered by measuring duty cycles from the end of each PWM cycle. If the duration of the first cycle of each new image is made longer than a default PWM period, the initial ramp-up time required may be correspondingly extended as well.

FIG. 5B illustrates a backlight 120 according to another example which is useful for understanding the present invention. In this example, multiple PWM controllers 122A-122D (collectively PWM controllers 122) are each controlled by a separate clock signal 124A-124D (collectively clock signals 124). PWM controllers 122 each generate PWM driving signals 123 for a group 125 of one or more light emitters 126. Clock signals 124 have a common period T but are phase shifted from one another such that the start times of PWM cycles generated by PWM controllers 122 are staggered. Clock signals 124 may be generated by phase shifting the output of a common source clock by different amounts. For example, in the illustrated example depicting four PWM controllers, clock signal 124A may be phase shifted by 0, clock signal 124B may be phase shifted by 90, clock signal 124C may be phase shifted by 180 and clock signal 124D may be phase shifted by 270. In another example embodiment, a clock signal to one or more PWM controllers is inverted relative to the clock signal to one or more other PWM controllers.

In some embodiments, each clock signal 124 may be switched between a first clock signal used for the first PWM cycle of a displayed image and a second clock signal used for subsequent PWM cycles of the same image. The first clock signal may have a longer period than the corresponding second clock signal (for example a period of 2T compared to T), but the same phase offset. The first clock signal may thus be used to extend the duration of the first PWM cycle of each displayed image relative to the duration of subsequent PWM cycles of the same image. In alternative embodiments the frequency of a clock signal may be changed such that a period of a first PWM cycle is longer than that of subsequent PWM cycles.

The examples described with respect to FIG. 1A, FIG. 1B, FIG. 2, FIG. 3, FIG. 4A, FIG. 4B, FIG. 5A, FIG. 5B, and FIG. 6 may be part of the embodiments of the present invention described below. Features of the embodiments mentioned below may be embodied according to the features of the examples described above.

### Improved Phasing Relationships

Now it will be described embodiments of phasing relationships and display systems. Some embodiments herein described may affect: (1) reduced instantaneous power demands, (2) increase backlighting precision with increased bit-depth of PWM drivers and/or controllers, (3) better matching the backlighting to images being rendered and (4) provide better text readability by providing backlight blanking at desired times.

One embodiment of a display system with such a phasing relationship will now be described with particular referenced specifications. It will be appreciated that the specifications described herein are exemplary and not limiting to the scope of the present application.

In one embodiment, the system may take a single frame and divided it into multiple PWM cycles. These PWM cycles may be individually controlled and can be reloaded per PWM period, thereby allowing the system to reload values given a single deep bit PWM value for that frame. The system may then further optimize this to distribute the start times in phases. This may be affected by splitting the PWM periods into phases and distributing the values of that PWM period to that phase. Such a system may not require as much instantaneous power because while a low value PWM LED shuts down on the later phases, the other LEDs may begin to turn ON. This allows an effective distribution of the overlap of LED PWM's being ON -- thus simultaneously increasing the lifetime of the supply and easing the requirements of the power supply.

As the PWM controller works at a comparatively faster frame rate (e.g., 3.6 Khz) then this PWM frame rate may be compared with the video frame operating the light modulator (e.g. 60-120 hz), it is possible to have approximately 60 PWM frames within a given video frame. In addition, with a 12-bit PWM controller, there are a possible 4096 steps to be employed for a given duty cycle.

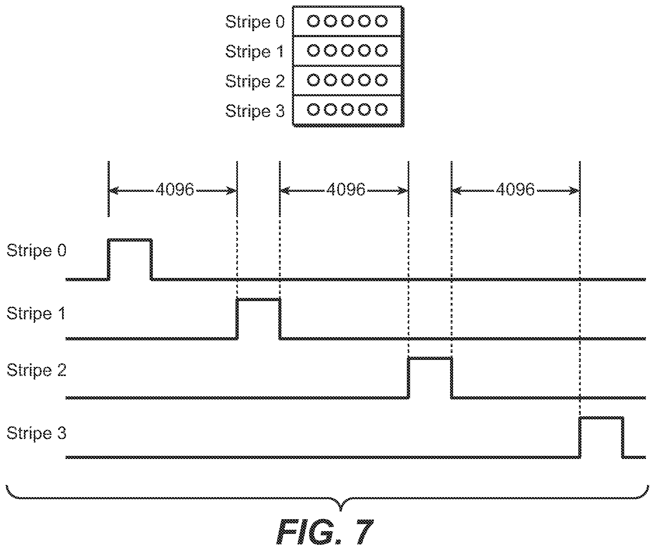

In order to reduce maximum peak current loads in a PWM based LED drive system, a phasing concept may be set which sets a limit on the number of LEDs that may be turned on at any one time. For one example, this number may be defined as being a fraction of the total number of LEDs in the system. For example, if the system is designed for n phases, then no more than N/n LEDs may be on at any one time, where N is the total number of LEDs. In this case there is no overlapping of phases. Thus, in one embodiment, the backlight of the display system may be striped to save overall power demand. FIG. 7 is one example embodiment of a display system according to the present invention in which the backlight is striped (Stripes 0, 1, 2, and 3 - as shown). These stripes may be staggered in their ON-OFF states as shown to reduce the instantaneous power demands of the display system.

Beyond peak current limitation where the number of LEDs are limited that may be turned on at any one time, a further refinement is possible by adding additional phases which may overlap. By staggering the startup of PWM cycles of each LED, the current load impulse is spread over time (as is shown in FIG. 3 above), thus reducing di/dt. Combining this with the peak current limitation concept, it is possible to get the benefit of the peak current limitation and reduce the di/dt impulse load on the power subsystem. This is done simply by maintaining the peak current limitation rule that no more than N/n LEDs may be on at any one time -- which means that there may be at least n phases. Now, if the two concepts are combined -- then modifying the rule that phases may not overlap by allowing that phases may overlap, but no more than N/n LEDs may be turned on at any one time, it is possible to reduced di/dt and limitation of peak current.

In another embodiment, if the LED is turning on at a temporal offset from the beginning of the PWM cycle and the LED may not cross a PWM cycle boundary, then the system might design a PWM limitation whereby PWM(max) = 100% - PWM(offset). As an alternate method, it may be possible to move any overlap due to an offset back into the beginning of the PWM cycle. For example if an LED temporal PWM offset is 25% into the PWM cycle and the PWM value is 80%, then the LED turn on time may be broken into two pieces - (1) 5% ON time from a 0% offset of the PWM cycle then (2) 75% ON time from the 25% offset.

### Extended Bit Depth

One embodiment of the present system comprises a design that takes a lower bit depth PWM LED driver controller and increases the bit depth per video frame to allow for more control over the light emitted during that frame. Currently, some commercial drivers use only 12bit PWM control. With these commercial drivers, one issue is that, as the LED was to be controlled at lower and lower luminances, the LEDs may have had a problem to control the color mix, as there may not be enough control at the bottom end. The human visual system is, however, sensitive to light at these lower levels.

For one example embodiment, if it is desired to make a very low white light that is adjusted very slightly cooler blue -- and it is possible to get down to PWM controls to be with PWM value of 1-- then if it is possible to have the Blue LED ON with PWM=1, while red and green are PWM=0, then the system may only get Blue and not white at this lower level. Alternatively, the system may have PWM =1 for all three R,G,B; but then the system must render whatever mix these three give me at this level.

Thus, in one embodiment, the system may determine what is the lowest the system can go without ever going to PWM=0, while keep true to the ratios -- i.e. if the Red needs to go down to PWM=1 and Green and Blue are higher values to keep the mix of white, such a setting helps to define the system's lowest luminance level of the back light. Thus, it is possible to allow more control at the lower levels which, in turn, allows the system to render better blacks and more accurate gray scale tracking.

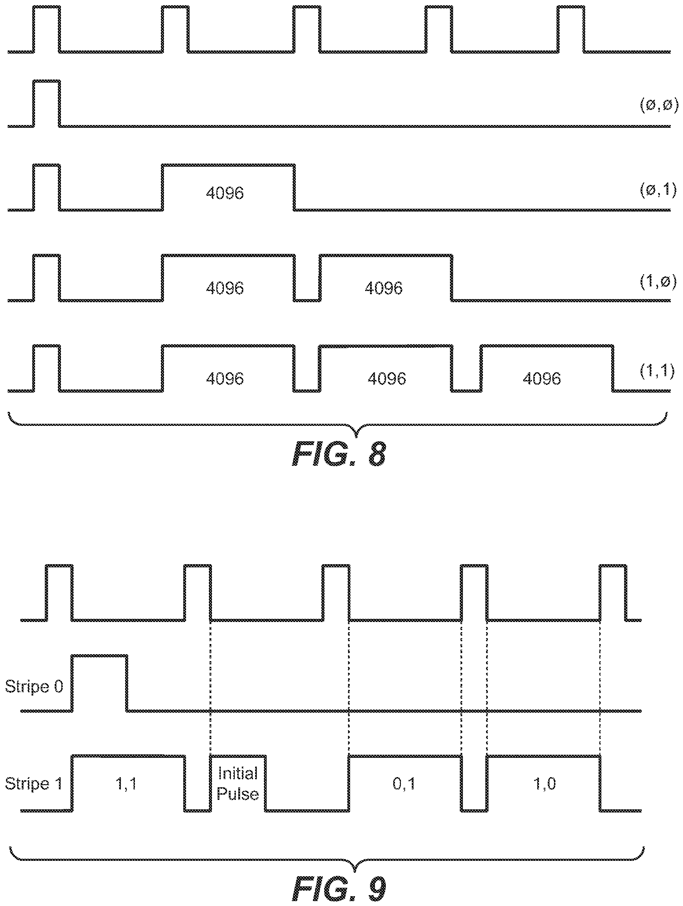

When the particular PWM frame rate is greater than the video frame rate, then matching these rates may allow for the capability of increasing the bit-depth of PWM control. For example, in one embodiment, as shown in FIG. 8, the 12-bit PWM controller may have its effective bit depth extending by 2 bits - to become an effective 14-bit controller. The extended bits ((0,0), (0,1), (1,0) and (1,1)) may be used for one stripe to add additional ON states as shown. In the example, the additional ON states are shown at step value 4096 - but it will be appreciated that other step values may be assumed within a duty cycle to assume different effective levels of luminance. FIG. 9 shows how the extended bits may be wrapped around in a striping scheme. For example, FIG. 9 shows how Stripe 1 may be driven with its extended bits - and extended bits (1,1) is shown wrapped to provide the desired result.

In one embodiment, with the capability of increasing the PWM bits by repeating the driver cycles multiple times to get more bits, it is possible to have more bits for R,G,B - thereby allowing the system to have a much lower black level. This is possible because the black may not be represented by all RGB values being all zero. The reason for this is because the next level up will be a huge jump in light since the RGB mix will not be 1,1,1 but more like 1,3,5 to have it be white. So with the extended bits PWM scheme, a 1 representation of any LED is much dimmer than a lower-bit PWM scheme with a 1 representation. Thus, additional levels of low luminance white light - or truer and blacker black levels - may be rendered when the display system is controlled by use of these extended bits PWM schemes.

### Improved Picture Quality

With an improved phasing scheme, it is also possible to improve the picture quality by matching the LCD response time to the LED phasing scheme.

For one embodiment, it is possible to have the ability of rolling the backlights to match the timing of the LCD in segments - particularly if the stripes of the backlights are spatially matched to the LCD segments (as in FIG. 1B). This is possible as the segments for an LCD frame may not update simultaneously - instead, the frame may be updated in offset. Thus, the LED image may match in the same segments as the LCD. For example, the LED image may update in the same segments as the LCD - e.g., 4 to 8 segments from top to bottom.

In addition, with given response times, it is possible to black out (e.g. turn OFF) each LED stripe advantageously. In one embodiment, a LED stripe may be blacked out a fraction of the time of the frame to avoid the viewing of the update-twist time of the LCD. This scheme would help to avoid noticeable LCD blur.

In one embodiment, because PWM controllers (comprising a first update period) can be updated multiple times in a video frame, this PWM updating can be advantageously matched to the LCD response time (a first response time period). For example, when the LCD is switching from black to white from one frame to another frame, this takes some time and it may be a significant fraction of the time of a frame. This fraction of the time may be matched with a PWM cycle of the LED driver. For example, if the display is going from a LCD value of 0 to 255 (e.g. from full OFF to Full ON), the PWMs in a frame may proceed as 0, 64, 256, 512, 2048, 4095, 4095, 4095 -- as opposed to just displaying 4095, 4095, 4095, 4095, 4095, 4095, repeatedly. Thus, the PWM signals are increased gradually over several update periods.

### Small Bright Features

In other embodiments, the maximum brightness of the display system may be defined differently. In fact, maximum brightness may be defined several ways: (1) maximum brightness over the full screen and (2) maximum brightness of a small bright feature. In the first instance, the maximum brightness could be defined as a fully open LCD at 100% PWM on the LEDs. In such a case, it is possible to set the drive current such that only one phase is required and the di/dt improvement may still be realized.

However, it is possible to improve the effective dynamic range of the display system with the concept of Small Bright Features (SBFs). SBFs may occur from time to time in an image - and may be accommodated if some headroom is designed into the display system to increase the LED dynamic range. SBFs may be detected in an image frame buffer -- as image data is read into the buffer. Such a buffer may be affected in light source controller 12 and/or light modulator controller 15 of FIG. 1A. Such a buffer may be implemented in other parts of the image pipeline of the display system, as is known in the art.

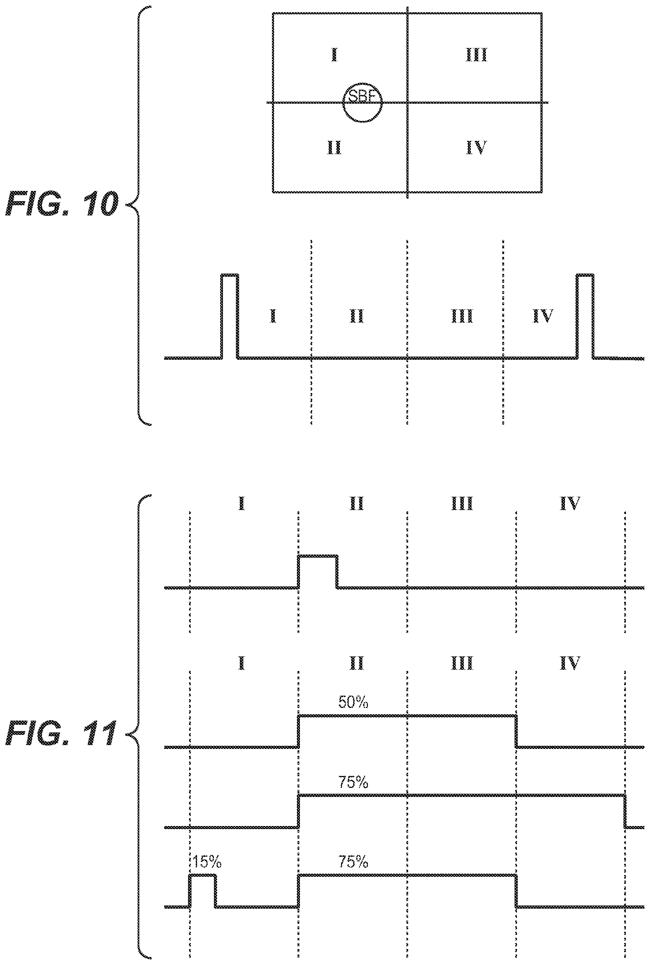

FIG. 10 depicts an occurrence of a SBF, as it may appear in one embodiment of an LED backlight. As shown, the LED backlights may be further assigned to a one of a number of partitions. For example, LEDs in FIG. 10 may be assigned to one of four partitions - I, II, III, and IV. In this case, the partitions may be actually physical partitioning of the area of the backlight itself. However, it will be appreciate that many other partitionings are possible and the scope of the present application encompasses them. For example, in other embodiments, however, it is possible to have substantially any two neighboring LEDs be assigned to different partitions.

A SBF is defined by an arbitrary group of LEDs that may ignore the phasing rules from time to time and be turned on for 100% of a PWM cycle. For example, an explosion at night may require a mostly dark screen with a small bright area, for example, 20% of the total area of the screen. As long as the maximum total current limitation is not exceeded, than the LED required to backlight the explosion could be given an exception to the rules set by the phasing limitations.

FIG. 11 shows two example embodiments of how a SBF may be handled, accordingly. The top timing diagram shows that, for one given SBF, the LEDs of partition II may be illuminated for approximately 15% of its cycle. The three following diagrams illustrate how partition II and III LEDs may be illuminated to produce a 50% cycle, partition LEDs II, III, and IV illuminated to produce at 75% cycle, and how partial partition LED I, together with partition LEDs II, III, and IV are illuminated to produce a 90% cycle. Other illumination patterns are of course possible with this scheme.

In order to allow this exception, the system may monitor predicted power for any given scene and allow (or partially allow) the SBF, accordingly, by either by allowing 100% of the desired PWM value or scaling it down in order to meet the system peak current and/or di/dt limitations.

A detailed description of one or more embodiments of the invention, read along with accompanying figures, that illustrate the principles of the invention has now been given. It is to be appreciated that the invention is described in connection with such embodiments, but the invention is not limited to any embodiment. The scope of the invention is limited only by the claims and the invention encompasses numerous alternatives, modifications and equivalents. Numerous specific details have been set forth in this description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

## Claims

1. A display system (10, 20) comprising:
a light modulator (17, 27) having a plurality of segments (28);
a light modulator controller (15), said light modulator controller (15) controlling the amount of light transmitted through said light modulator (17, 27), said light modulator controller (15) capable of updating said light modulator (17, 27) in segments (28), each segment update comprising a first response time period;
a backlight (14, 24, 60), said backlight (14, 24, 60) comprising a plurality of stripes (26, 62), the stripes (26, 62) having each a plurality of light emitters (64, 126);
one or more backlight controllers (12, 66), said backlight controllers (12, 66) configured to control brightness levels of said light emitters (64, 126) within the stripes (26, 62) by applying pulse width modulation driving signals (74, 123), denoted by PWM driving signals (74, 123), to each stripe (26, 62), each PWM driving signal (74, 123) for each stripe (26, 62) having a first update period;
wherein each one of said light modulator segments (28) is matched spatially to one of said backlight stripes (26, 62) and further wherein said first update period is smaller than said first response time;
wherein said backlight controllers (12, 66) are configured to black out said stripes (26, 62) of light emitters (64, 126) at the start of said first response time period in order to avoid displaying the update twist time of said light modulator (17, 27);
wherein said backlight controllers (12, 66) are configured to control brightness levels of said light emitters (64, 126) by PWM driving signals (74, 123) having a period T, a duty cycle proportional to the brightness level, and a relative phase shift between said PWM driving signals (74, 123) of different stripes (26, 62);
**characterized in that** said backlight controllers (12, 66) output a first set of pulse width modulation drive values, denoted by PWM drive values, within a single period T, said first set of PWM drive values representing a resolution of a first bit depth; and
wherein further said stripes (26, 62) of light emitters (64, 126) are controlled by PWM driving signals (74, 123) over a plurality of periods T' such that said light emitters (64, 126) are controlled over a second set of PWM drive values, said second set of PWM drive values representing a resolution of a second bit depth, where said second bit depth is greater than said first bit depth, each period T' repeating a pulse width modulation driver cycle, denoted by PWM driver cycle, of period T multiple times such that additional levels of low luminance white light are renderable with the backlight (14, 24, 60), wherein a limit is set on the number of light emitters (64,126) that are currently turned on, and wherein the limit is a fraction of the total number of the light emitters (64, 126) of the display system (10, 20).

2. The display system (10, 20) of Claim 1 wherein when light modulator signals are transitioning from full OFF to full ON, said PWM driving signals (74, 123) are increased gradually over multiple first update periods.

3. The display system (10, 20) of any of Claims 1 to 2 wherein said backlight controllers (12, 66) comprise a first set of PWM drive values over a single pulse width modulation period, denoted by PWM period, corresponding to a first bit depth of 12 bits and further wherein said PWM drive signals (74, 123) for a given stripe (26, 62) of light emitters (64, 126) are controlled over four PWM periods, corresponding to a second bit depth of 14 bits.

4. The display system (10, 20) of any of Claims 1 to 3 wherein further each light emitter (64, 126) is assigned to one of a plurality of partitions;
wherein said backlight controllers (12, 66) are configured to control brightness levels of said light emitters (64, 126) by one of a group (125), said group (125) comprising:
controlling light emitters (64, 126) within the stripes (26, 62) by applying PWM driving signals (74, 123) to each stripe (26, 62), and
controlling light emitters (64, 126) within a plurality of partitions; and
wherein further when a small bright feature is detected in an image frame then said backlight controllers (12, 66) controlling a subset of light emitters (64, 126) within one or more of said partitions.

5. The display system (10, 20) of Claim 4 wherein said partitions of said light emitters (64, 126) partition said backlight (14, 24, 60) into regions of light emitters (64, 126) assigned to the same partition.

6. The display system (10, 20) of Claim 4 wherein substantially any two light adjacent emitters (64, 126) are assigned to different partitions.

## Patentansprüche

1. Anzeigesystem (10, 20), das Folgendes umfasst:
einen Lichtmodulator (17, 27) mit mehreren Segmenten (28) ;
eine Lichtmodulatorsteuerung (15), wobei die Lichtmodulatorsteuerung (15) die durch den Lichtmodulator (17, 27) transmittierte Menge an Licht steuert, wobei die Lichtmodulatorsteuerung (15) fähig ist, den Lichtmodulator (17, 27) in Segmenten (28) zu aktualisieren, wobei jede Segmentaktualisierung eine erste Reaktionszeitdauer umfasst;
eine Hintergrundbeleuchtung (14, 24, 60), wobei die Hintergrundbeleuchtung (14, 24, 60) mehrere Streifen (26, 62) umfasst, wobei die Streifen (26, 62) jeweils mehrere Lichtemitter (64, 126) aufweisen;
eine oder mehrere Hintergrundbeleuchtungssteuerungen (12, 66), wobei die Hintergrundbeleuchtungssteuerungen (12, 66) konfiguriert sind, Helligkeitsniveaus der Lichtemitter (64, 126) innerhalb der Streifen (26, 62) durch Anlegen von Pulsbreitenmodulationsansteuerungssignalen (74, 123), als PWM-Ansteuerungssignale (74, 123) bezeichnet, an jeden Streifen (26, 62) zu steuern, wobei jedes PWM-Ansteuerungssignal (74, 123) für jeden Streifen (26, 62) eine erste Aktualisierungsdauer aufweist;
wobei jedes der Lichtmodulatorsegmente (28) räumlich an einen der Hintergrundbeleuchtungsstreifen (26, 62) angepasst ist und wobei ferner die erste Aktualisierungsdauer kürzer ist als die erste Reaktionszeit;
wobei die Hintergrundbeleuchtungssteuerungen (12, 66) konfiguriert sind, die Streifen (26, 62) von Lichtemittern (64, 126) am Anfang der ersten Reaktionszeitdauer zu verdunkeln, um zu vermeiden, dass die Aktualisierungsverdrehungszeit des Lichtmodulators (17, 27) angezeigt wird;
wobei die Hintergrundbeleuchtungssteuerungen (12, 66) konfiguriert sind, Helligkeitsniveaus der Lichtemitter (64, 126) durch PWM-Ansteuerungssignale (74, 123) mit einer Periodendauer T, einem zu dem Helligkeitsniveau proportionalen Tastgrad und einer relativen Phasenverschiebung zwischen den PWM-Ansteuerungssignalen (74, 123) verschiedener Streifen (26, 62) zu steuern;
**dadurch gekennzeichnet, dass**
die Hintergrundbeleuchtungssteuerungen (12, 66) einen ersten Satz von Pulsbreitenmodulationsansteuerungswerten, als PWM-Ansteuerungswerte bezeichnet, innerhalb einer einzigen Periodendauer T ausgeben, wobei der erste Satz von PWM-Ansteuerungswerten eine Auflösung einer ersten Bittiefe repräsentiert; und
wobei die Streifen (26, 62) von Lichtemittern (64, 126) ferner durch PWM-Ansteuerungssignale (74, 123) über mehrere Periodendauern T' so gesteuert werden, dass die Lichtemitter (64, 126) über einen zweiten Satz von PWM-Ansteuerungswerten gesteuert werden, wobei der zweite Satz von PWM-Ansteuerungswerten eine Auflösung einer zweiten Bittiefe repräsentiert, wobei die zweite Bittiefe größer als die erste Bittiefe ist, wobei jede Periodendauer T` einen Pulsbreitenmodulationsansteuerungszyklus, als PWM-Ansteuerungszyklus bezeichnet, einer Periodendauer T mehrmals wiederholt, so dass zusätzliche Niveaus von Weißlicht mit niedriger Leuchtdichte mit der Hintergrundbeleuchtung (14, 24, 60) darstellbar sind, wobei eine Grenze der Anzahl von Lichtemittern (64, 126), die gegenwärtig eingeschaltet sind, festgesetzt ist und wobei die Grenze ein Bruchteil der Gesamtanzahl der Lichtemitter (64, 126) des Anzeigesystems (10, 20) ist.

2. Anzeigesystem (10, 20) nach Anspruch 1, wobei, wenn Lichtmodulatorsignale von vollständig AUS zu vollständig EIN übergehen, die PWM-Ansteuerungssignale (74, 123) schrittweise über mehrere erste Aktualisierungsdauern erhöht werden.

3. Anzeigesystem (10, 20) nach einem der Ansprüche 1 bis 2, wobei die Hintergrundbeleuchtungssteuerungen (12, 66) einen ersten Satz von PWM-Ansteuerungswerten über einer einzigen Pulsbreitenmodulationsperiodendauer, als PWM-Periodendauer bezeichnet, umfassen, der einer ersten Bittiefe von 12 Bits entspricht, und wobei ferner die PWM-Ansteuerungssignale (74, 123) für einen gegebenen Streifen (26, 62) von Lichtemittern (64, 126) über vier PWM-Periodendauern gesteuert werden, was einer zweiten Bittiefe von 14 Bits entspricht.

4. Anzeigesystem (10, 20) nach einem der Ansprüche 1 bis 3,
wobei jeder Lichtemitter (64, 126) einer von mehreren Unterteilungen zugeordnet ist;
wobei die Hintergrundbeleuchtungssteuerungen (12, 66) konfiguriert sind, Helligkeitsniveaus der Lichtemitter (64, 126) durch eines einer Gruppe (125) zu steuern, wobei die Gruppe (125) Folgendes umfasst:
Steuern von Lichtemittern (64, 126) innerhalb der Streifen (26, 62) durch Anlegen von PWM-Ansteuerungssignalen (74, 123) an jeden Streifen (26, 62), und
Steuern von Lichtemittern (64, 126) innerhalb von mehreren Unterteilungen; und
wobei, wenn ein kleiner heller Bestandteil in einem Einzelbild detektiert wird, die Hintergrundbeleuchtungssteuerungen (12, 66) dann ferner einen Teilsatz von Lichtemittern (64, 126) innerhalb einer oder mehrerer der Unterteilungen steuern.

5. Anzeigesystem (10, 20) nach Anspruch 4, wobei die Unterteilungen der Lichtemitter (64, 126) die Hintergrundbeleuchtung (14, 24, 60) in Gebiete von Lichtemittern (64, 126), die der gleichen Unterteilung zugeordnet sind, unterteilen.

6. Anzeigesystem (10, 20) nach Anspruch 4, wobei im Wesentlichen zwei beliebige angrenzende Lichtmitter (64, 126) verschiedenen Unterteilungen zugeordnet sind.

## Revendications

1. Système d'affichage (10, 20) comprenant :
un modulateur de lumière (17, 27) ayant une pluralité de segments (28) ;
un contrôleur de modulateur de lumière (15), ledit contrôleur de modulateur de lumière (15) contrôlant la quantité de lumière transmise à travers ledit modulateur de lumière (17, 27), ledit contrôleur de modulateur de lumière (15) étant capable de mettre à jour ledit modulateur de lumière (17, 27) par segments (28), chaque mise à jour de segment comprenant une première période de temps de réponse ;
un rétroéclairage (14, 24, 60), ledit rétroéclairage (14, 24, 60) comprenant une pluralité de bandes (26, 62), les bandes (26, 62) ayant chacune une pluralité d'émetteurs de lumière (64, 126) ;
un ou plusieurs contrôleurs de rétroéclairage (12, 66), lesdits contrôleurs de rétroéclairage (12, 66) étant configurés pour contrôler des niveaux de luminosité desdits émetteurs de lumière (64, 126) dans les bandes (26, 62) en appliquant des signaux de commande de modulation de largeur d'impulsion (74, 123), appelés signaux de commande PWM (74, 123), à chaque bande (26, 62), chaque signal de commande PWM (74, 123) pour chaque bande (26, 62) ayant une première période de mise à jour ;
où chacun desdits segments de modulateur de lumière (28) est en correspondance spatiale avec une desdites bandes de rétroéclairage (26, 62) et où, en outre, ladite première période de mise à jour est plus courte que ledit premier temps de réponse ;
où lesdits contrôleurs de rétroéclairage (12, 66) sont configurés pour noircir lesdites bandes (26, 62) des émetteurs de lumière (64, 126) au début de ladite période de temps de réponse de manière à éviter d'afficher le temps de basculement de mise à jour dudit modulateur de lumière (17, 27) ;
où lesdits contrôleurs de rétroéclairage (12, 66) sont configurés pour contrôler les niveaux de luminosité desdits émetteurs de lumière (64, 126) par des signaux de commande PWM (74, 123) ayant une période T, un cycle de service proportionnel au niveau de luminosité, et un déphasage relatif entre lesdits signaux de commande PWM (74, 123) de différentes bandes (26, 62) ;
**caractérisé en ce que**
lesdits contrôleurs de rétroéclairage (12, 66) délivrent en sortie un premier ensemble de valeurs de commande de modulation de largeur d'impulsion, appelées valeurs de commande PWM, dans une période unique T, ledit premier ensemble de valeurs de commande PWM représentant une résolution d'une première profondeur de bit ; et
d'autres bandes (26, 62) d'émetteurs de lumière (64, 126) sont commandées par des signaux de commande PWM (74, 123) sur une pluralité de périodes T' de manière à ce que lesdits émetteurs de lumière (64, 126) soient contrôlés sur un second ensemble de valeurs de commande PWM, ledit second ensemble de valeurs de commande PWM représentant une résolution d'une seconde profondeur de bit, ou ladite seconde profondeur de bit est supérieure à ladite première profondeur de bit, chaque période T' répétant plusieurs fois un cycle de commande de modulation de largeur d'impulsion, appelé cycle de commande PWM, de période T, de manière à ce que des niveaux supplémentaires de lumière blanche de faible luminance puissent être rendus avec le rétroéclairage (14, 24, 60),
où une limite est définie sur le nombre d'émetteurs de lumière (64, 126) qui sont actuellement allumés, et où la limite est une fraction du nombre total d'émetteurs de lumière (64, 126) du système d'affichage (10, 20).

2. Système d'affichage (10, 20) de la revendication 1, dans lequel, lorsque lesdits signaux du modulateur de lumière passent de tous en position OFF à tous en position ON, lesdits signaux de commande PWM (74, 123) sont augmentés graduellement sur plusieurs premières périodes de mise à jour.

3. Système d'affichage (10, 20) de l'une quelconque des revendications 1 et 2, dans lequel lesdits contrôleurs de rétroéclairage (12, 66) comprennent un premier ensemble de valeurs de commande PWM sur une seule période de modulation de largeur d'impulsion, appelée période PWM, correspondant à une première profondeur de bit de 12 bits et où, en outre, lesdits signaux de commande PWM (74, 123) pour une bande donnée (26, 62) d'émetteurs de lumière (64, 126) sont commandés sur quatre périodes PWM, correspondant à une seconde profondeur de bit de 14 bits.

4. Système d'affichage (10, 20) de l'une quelconque des revendications 1 à 3, dans lequel, en outre, chaque émetteur de lumière (64, 126) est affecté à une d'une pluralité de partitions ;
où lesdits contrôleurs de rétroéclairage (12, 66) sont configurés pour contrôler les niveaux de luminosité desdits émetteurs de lumière (64, 126) par un émetteur d'un groupe (125), ledit groupe (125) comprenant :
de contrôler des émetteurs de lumière (64, 126) dans les bandes (26, 62) en appliquant des signaux de commande PWM (74, 123) à chaque bande (26, 62), et
de contrôler des émetteurs de lumière (64, 126) dans une pluralité de partitions ; et
où, en outre, lorsqu'une faible luminosité est détectée dans une image, alors lesdits contrôleurs de rétroéclairage (12, 66) contrôlent un sous-ensemble d'émetteurs de lumière (64, 126) dans une ou plusieurs desdites partitions.

5. Système d'affichage (10, 20) de la revendication 4, dans lequel lesdites partitions desdits émetteurs de lumière (64, 126) partitionnent ledit rétroéclairage (14, 24, 60) en régions d'émetteurs de lumière (64, 126) assignées à la même partition.

6. Système d'affichage (10, 20) de la revendication 4, dans lequel sensiblement n'importe quels deux émetteurs de lumière (64, 126) adjacents sont assignés à des partitions différentes.
